# EUROPEAN PATENT SPECIFICATION

(11) **EP 3 620 437 B1**
(45) Date of publication and mention of the grant of the patent: **26.05.2021**
(21) Application number: 19196060.8
(22) Date of filing: 06.09.2019
(51) Int. Cl.: C01G 23/00, H01M 4/485, H01M 4/62, H01M 10/0525, H01M 10/054

(54) **LINEAR HIERARCHICAL STRUCTURE LITHIUM TITANATE MATERIAL, PREPARATION AND APPLICATION THEREOF**
LITHIUMTITANATMATERIAL MIT LINEARER HIERARCHISCHER STRUKTUR, HERSTELLUNG UND ANWENDUNG DAVON
MATÉRIAU DE TITANATE DE LITHIUM À STRUCTURE HIÉRARCHIQUE LINÉAIRE, SA PRÉPARATION ET SON APPLICATION

(30) Priority: 06.09.2018 CN 201811038606
(43) Date of publication of application: 11.03.2020
(73) Proprietor: PetroChina Company Limited, Dongcheng District Beijing 100007 (CN)
(72) Inventor: Li, Jianming, Beijing City, Beijing 100724 (CN); Jin, Xu, Beijing City, Beijing 100724 (CN); Wang, Xiaoqi, Beijing City, Beijing 100724 (CN); Sun, Liang, Beijing City, Beijing 100724 (CN); Su, Ling, Beijing City, Beijing 100724 (CN); Liu, Xiaodan, Beijing City, Beijing 100724 (CN)
(74) Representative: Slingsby Partners LLP

(56) References cited:
- CN-A- 104 201 364
- YAN-MEI JIANG ET AL: "Hierarchical Li4Ti5O12/TiO2 composite tubes with regular structural imperfection for lithium ion storage", SCIENTIFIC REPORTS, vol. 3, no. 1, 1 December 2013 (2013-12-01), XP055644190, DOI: 10.1038/srep03490
- JIAGUO YU ET AL: "Fabrication and photovoltaic performance of hierarchically titanate tubular structures self-assembled by nanotubes and nanosheets", CHEMICAL COMMUNICATIONS, vol. 47, no. 32, 1 January 2011 (2011-01-01), pages 9161-9163, XP55642506, UK ISSN: 1359-7345, DOI: 10.1039/c1cc12722e

## Description

### Technical field

The invention relates to the field of energy, and in particular, to a linear hierarchical structure lithium titanate material, preparation and application thereof.

### Background

As an ideal and promising negative electrode material for lithium-ion battery, lithium titanate may have a charge-discharge cycle number up to thousands, and thus become a hot spot in the field of electrode material research.

The use of lithium titanate in lithium-ion battery may be influenced largely by its size and morphology. For example, a hierarchical structure material can well preserve the microstructural function of the material while sufficiently making use of the nanostructure properties of the material. The components of the hierarchical structure material are generally small nanoparticles, which can increase the specific surface area of the material and improve the nanoscale performances of the material; the hierarchical structure material is in micron scale as a whole, which is beneficial to the accumulation between whole particles, and can greatly improve the rapid charge and discharge performance of the battery. In addition, as compared with the particles, the linear structure lithium titanate material can reduce the grain boundary between the particles and facilitate the transport of carriers in the long-axis direction. In the field of electrode materials for battery, the long axis may facilitate the effective migration of electrons and the short axis may facilitate the rapid intercalation and deintercalation of lithium, sodium or potassium ions. The linear structure has better charge-discharge performance and the like than the particulates. Therefore, the linear hierarchical structure lithium titanate material can greatly improve the specific surface area of the material, enhance the surface activity of the material, reduce grain boundaries between the particles and improve the effective transport of carriers in the long-axis direction, which can greatly improve the application performance of the material in a battery electrode in terms of capacity and rapid charge-discharge.

The existing methods for producing lithium titanate mainly include solid state synthesis and hydrothermal reaction preparation. Among them, the solid state synthesis method generally includes, firstly mixing well raw materials such as lithium hydroxide or lithium carbonate and titanium oxide by means of ball milling or in an organic solvent, and then sintering the resultant at a high temperature of more than 800°C to obtain lithium titanate. The preparation method requires an excess of lithium hydroxide or lithium carbonate, and the obtained lithium titanate generally has a low purity, a size of micron scale, and poor morphology and uniformity. The hydrothermal preparation method for lithium titanate usually involves: producing sodium titanate by a hydrothermal process using commercial titanium oxide and sodium hydroxide as starting materials, and immersing sodium titanate into an acid solution to obtain titanic acid by ion exchange; and then mixing the titanic acid with a lithium hydroxide solution or a lithium titanate precursor followed by annealing the product at different temperatures to obtain the lithium titanate product. The hydrothermal process in the preparation method involves a high temperature and a high pressure, which is dangerous to some extent. Meanwhile, the reaction system is a strong alkali of 10 mol/L, which is highly corrosive at high temperatures. Thus, it has a harsh requirement for hydrothermal reaction apparatus, and it may be difficult to find a suitable reaction apparatus. In addition, the preparation method uses an alkali at a high concentration, which makes the subsequent product separation and purification difficult, and also brings pollution to the environment. Therefore, the hydrothermal preparation method for lithium titanate still faces many difficulties in the synthesis apparatus and subsequent processing, and the mass production cannot be realized. CN104201364A discloses a spinel-type lithium titanate nanowire and a method for producing it by treating hydrothermically a solution comprising a lithium peroxo-titanate compound and by annealing the formed nanowire.

To sum up, in order to further improve the application performance of lithium titanate materials in the field of lithium-ion battery, it is urgent to develop a lithium titanate electrode material having a linear hierarchical structure. In addition, the development of a method for producing lithium titanate having a simple technological process and easy for large-scale production, especially a method for producing a lithium titanate material having a linear hierarchical structure, still faces great technical challenges.

### Summary of the Invention

It is an object of the invention to provide a linear hierarchical structure lithium titanate material.

It is another object of the invention to provide a method for preparing the linear hierarchical structure lithium titanate material.

It is still another object of the invention to provide an electrode material for an ion battery.

In order to achieve the above objects, in one aspect, the invention provides a linear hierarchical structure lithium titanate material, wherein the crystal phase of the lithium titanate material is a spinel-type crystal phase or a monoclinic crystal phase or a composite crystal phase thereof; the lithium titanate material is mainly composed of a linear hierarchical structure; and the surface components of the linear hierarchical structure lithium titanate material are nanosheets.

According to some specific embodiments of the invention, the surface of the linear hierarchical structure lithium titanate material is further loaded with one or more selected from the group consisting of carbon, carbon nanotubes, graphene, black phosphorus, metals, and semiconductors.

The linear hierarchical structure has an aspect ratio greater than 10.

According to some specific embodiments of the invention, the linear hierarchical structure has an aspect ratio of 10 to 100.

According to some specific embodiments of the invention, the linear hierarchical structure is a solid linear structure or a hollow linear structure.

According to some specific embodiments of the invention, the linear hierarchical structure has a diameter of 20 nm to 1 µm and a length of 1 µm to 50 µm.

According to some specific embodiments of the invention, the linear hierarchical structure has a diameter of 50 nm to 500 nm and a length of 5 µm to 20 µm.

The nanosheets have a size of 5 nm to 300 nm.

According to some specific embodiments of the invention, the nanosheets have a size of 10 nm to 100 nm.

The nanosheets have a thickness of 1 nm to 20 nm.

According to some specific embodiments of the invention, the nanosheets have a thickness of 1 nm to 10 nm.

According to some specific embodiments of the invention, the method for preparing the linear hierarchical structure lithium titanate material comprises the following steps:
(1) preparing a linear structure lithium peroxotitanate;
(2) subjecting the linear structure lithium peroxotitanate obtained in the step (1) to a hydrothermal reaction or a solvothermal reaction to obtain a linear hierarchical structure lithium titanate precursor;
(3) subjecting the linear hierarchical structure lithium titanate precursor obtained in the step (2) to an annealing treatment to obtain the linear hierarchical structure lithium titanate material.

According to some specific embodiments of the invention, the method further comprises preparing a linear structure lithium peroxotitanate, comprising the followings steps:
(a1) preparing a dispersion containing titanium peroxo-complex;
(b1) adding a lithium compound into the dispersion containing titanium peroxo-complex obtained in the step (a1) to form a solution;
(c1) subjecting the solution obtained in the step (b1) to a reaction under heating to obtain the linear structure lithium peroxotitanate;
or, comprising the followings steps:
(a2) subjecting a titanium source to a hydrolysis reaction to form a hydrated titanic acid precipitate;
(b2) dispersing the hydrated titanic acid precipitate obtained in the step (a2) in an aqueous hydrogen peroxide solution containing lithium hydroxide, and stirring to form a solution;
(c2) subjecting the solution obtained in the step (b2) to a reaction under heating to obtain the linear structure lithium peroxotitanate.

According to some specific embodiments of the invention, the method further comprises subjecting the linear structure lithium peroxotitanate obtained in the step (c1) and the step (c2) to a low-temperature treatment for decomposition and removal of peroxy on the surface of the linear structure lithium peroxotitanate, to obtain a linear structure lithium peroxotitanate having peroxy removed on the surface thereof.

According to some specific embodiments of the invention, the low-temperature treatment is carried out at a temperature of 120°C to 200°C for 1h to 12h.

According to some specific embodiments of the invention, the system of the hydrothermal reaction is selected from a pure water system, an acidic water system or an alkaline water system; and the hydrothermal reaction is carried out at a temperature of 100°C to 150°C for 1h to 24h.

It is understood that the pure water system of the invention refers to a neutral water system, that is, water having a neutral pH, such as deionized water, domestic water, industrial water, etc.

According to some specific embodiments of the invention, the system of the solvothermal reaction is selected from an aqueous alcohol solution system or an alcohol solution system; and the solvothermal reaction is carried out at a temperature of 80°C to 150°C for 1h to 24h.

According to some specific embodiments of the invention, the annealing treatment is carried out at a temperature of 300°C to 700°C for 1h to 24h.

According to some specific embodiments of the invention, the titanium peroxo-complex in the dispersion containing titanium peroxo-complex has a concentration of 0.01 mol/L to 1 mol/L.

According to some specific embodiments of the invention, the titanium peroxo-complex in the dispersion containing titanium peroxo-complex has a concentration of 0.05 mol/L to 0.5 mol/L.

According to some specific embodiments of the invention, the method further comprises the preparation process of a dispersion containing titanium peroxo-complex, comprising the step of: dispersing a titanium compound into an aqueous peroxide solution to form a dispersion, to obtain the dispersion containing titanium peroxo-complex.

According to some specific embodiments of the invention, the titanium compound is selected from one or more of metallic titanium, titanium ethoxide, titanium isopropoxide, tetrabutyl titanate, titanium glycolate, titanium glyceroxide, titanium sulfate, titanium oxysulfate, titanium tetrachloride, titanium tetrafluoride, ammonium fluorotitanate, titanium nitride, titanium oxide, and titanic acid.

According to some specific embodiments of the invention, the peroxide is selected from one or more of hydrogen peroxide, urea peroxide and peracetic acid.

According to some specific embodiments of the invention, the method further comprises, after dispersing a titanium compound into a peroxide aqueous solution to form a dispersion, adding a polymer into the dispersion to obtain the dispersion containing titanium peroxo-complex.

According to some specific embodiments of the invention, the polymer is selected from one or more of chitosan, guar, methyl cellulose, ethyl cellulose, hydroxyethyl cellulose, hydroxypropyl cellulose, hydroxypropyl methyl cellulose, polyvinyl alcohol, polyacrylamide, polyethylene oxide, polyethylene glycol, and polyvinylpyrrolidone.

According to some specific embodiments of the invention, the polymer is added in an amount such that the content of the polymer in the obtained dispersion containing titanium peroxo-complex is 0.01% to 10% by mass.

According to some specific embodiments of the invention, the polymer is added in an amount such that the content of the polymer in the obtained dispersion containing titanium peroxo-complex is 0.1% to 10% by mass.

According to some specific embodiments of the invention, the lithium compound is selected from one or more of lithium hydroxide, lithium oxide, lithium peroxide, and lithium superoxide.

According to some specific embodiments of the invention, the lithium compound is used in an amount such that the concentration of lithium ions in the solution formed by adding the lithium compound is 0.4 mol/L to 2.0 mol/L.

According to some specific embodiments of the invention, in the step (c1) and the step (c2), the reaction under heating is independently carried out at a temperature of 60°C to 100°C for 0.5 h to 24 h.

According to some specific embodiments of the invention, the titanium source is selected from one or more of titanium ethoxide, titanium isopropoxide, tetrabutyl titanate, titanium glycolate, titanium glyceroxide, titanium sulfate, titanium oxysulfate, titanium tetrachloride, titanium tetrafluoride, ammonium fluorotitanate, titanium nitride, titanic acid, and industrial titanium-containing compounds.

According to some specific embodiments of the invention, in the step (a2), the hydrolysis reaction comprises dispersing the titanium source in water for hydrolysis to produce a hydrated titanic acid precipitate, or, the hydrolysis reaction comprises dispersing the titanium source in an aqueous solution containing an alkaline substance for hydrolysis to produce a hydrated titanic acid precipitate.

According to some specific embodiments of the invention, the alkaline substance is selected from one or more of aqueous ammonia, sodium hydroxide, potassium hydroxide, tetramethylammonium hydroxide, tetraethylammonium hydroxide, tetrapropylammonium hydroxide, tetrabutylammonium hydroxide, ethylenediamine, diethylamine, triethylamine, ethylamine, ethanolamine, and diethanolamine.

According to some specific embodiments of the invention, the hydrolysis reaction is carried out at normal temperature under normal pressure.

According to some specific embodiments of the invention, the step (a2) further comprises a step of purifying the obtained hydrated titanic acid precipitate crude product after hydrolysis and using the purified hydrated titanic acid precipitate in the step (b2); wherein the purification is selected from one or more of water washing - separation by centrifugation, water washing - membrane separation, water washing - filtration and dialysis.

According to some specific embodiments of the invention, the purified hydrated titanic acid has a purity of 97% or more.

According to some specific embodiments of the invention, in the step (b2), the concentration of lithium hydroxide in the aqueous hydrogen hydroxide solution containing lithium hydroxide is 0.4 mol/L to 2.0 mol/L.

According to some specific embodiments of the invention, in the step (b2), the concentration of lithium hydroxide in the aqueous hydrogen hydroxide solution containing lithium hydroxide is 1.0 mol/L to 1.5 mol/L.

According to some specific embodiments of the invention, the volume fraction of hydrogen peroxide in the aqueous hydrogen hydroxide solution containing lithium hydroxide is 0.5% to 10%.

According to some specific embodiments of the invention, the volume fraction of hydrogen peroxide in the aqueous hydrogen hydroxide solution containing lithium hydroxide is 1% to 3%.

According to some specific embodiments of the invention, the method further comprises a step of loading the surface of the obtained linear hierarchical structure lithium titanate material with one or more of carbon, carbon nanotubes, graphene, black phosphorus, metals and semiconductors, when the linear hierarchical structure lithium titanate material is obtained after the annealing treatment in the step (3).

In another aspect, the invention further provides a method for preparing the linear hierarchical structure lithium titanate material, wherein the method comprises the steps of:
(1) preparing a linear structure lithium peroxotitanate;
(2) subjecting the linear structure lithium peroxotitanate obtained in the step (1) to a hydrothermal reaction or a solvothermal reaction to obtain a linear hierarchical structure lithium titanate precursor;
(3) subjecting the linear hierarchical structure lithium titanate precursor obtained in the step (2) to an annealing treatment to obtain the linear hierarchical structure lithium titanate material.

In yet another aspect, the invention further provides an electrode material for ion battery, wherein the electrode material is mainly composed of any of the linear hierarchical structure lithium titanate material according to the invention.

According to some specific embodiments of the invention, the ion battery is selected from lithium ion battery, sodium ion battery, potassium ion battery, or magnesium ion battery.

It should be emphasized that the term "comprise/comprising" in the invention, when used herein, refers to the presence of features, integers, steps or components, but does not preclude the presence or addition of one or more of other features, integers, steps or components.

Features described and/or illustrated with respect to one embodiment in the invention may be used in one or more of other embodiments in the same or similar manner, in combination with, or in place of, the features in other embodiments.

Any numerical value recited herein includes all values of the lower and upper values in increments of one unit from the lower limit to the upper limit, provided that there is an interval of at least two units between any lower value and any higher value. For example, if the value of the number of components or a process variable (e.g., temperature, pressure, time, etc.) is stated to be from 1 to 90, preferably from 20 to 80, more preferably from 30 to 70, it is intended that the values such as 15 to 85, 22 to 68, 43 to 51, and 30 to 32 are also explicitly listed in the specification. For a value less than 1, it is appropriately considered that one unit is 0.0001, 0.001, 0.01, or 0.1. These are merely examples that are intended to be expressly stated, and all possible combinations of numerical values recited between the minimum and maximum values are considered to be explicitly described in this specification in a similar manner.

In summary, the invention provides a linear hierarchical structure lithium titanate material, and preparation and application thereof. The lithium titanate material according to the invention has the following advantages:
(1) For the first time, the invention provides a linear hierarchical structure lithium titanate material, in which the surface components are nanosheets.
(2) The long axis of the linear structure facilitates the effective migration of electrons, the sheet-like hierarchical structure facilitates the rapid intercalation and deintercalation process of lithium ions, sodium ions or potassium ions, and a large specific surface area facilitates the contact area between the electrolyte solution and the electrodes and reduces the current density, thus is excellent in a rapid charge-discharge performance of the battery.
(3) The preparation technique for the linear hierarchical structure lithium titanate material provided by the method cannot be achieved by other methods.
(4) The hierarchical structure provided by the method can increase the specific surface area of the lithium titanate, increase the contact area with the electrolyte solution when the lithium titanate is used as the electrode material, decrease the current density, and improve the battery performance.
(5) The linear hierarchical structure provided by the method can reduce the grain boundary between the particles, facilitate the transport of carriers in the long-axis direction, and enhance the application effect of the electrode material.
(6) The method has a simple preparation process, is easy to control the process parameters, uses widely available raw materials, has a low production cost, and is easy to apply to a large-scale industrial production.

### Brief Description of the Drawings

Fig. 1 is an XRD pattern of the lithium titanate material (a spinel-type lithium titanate crystal phase) of Example 1;
Fig. 2 is an SEM image of the lithium titanate material (a linear structure) of Example 1;
Fig. 3 is an SEM image of the linear lithium titanate material (a hierarchical structure) of Example 1;
Fig. 4 is an SEM image of the surface components (nanosheets) of the linear hierarchical structure lithium titanate material of Example 1;
Fig. 5 is a discharge capacity diagram of a lithium ion battery in which the linear hierarchical structure lithium titanate material of Example 1 is used as an electrode material at various charge and discharge rates;
Fig. 6 is an SEM image of the hollow linear structure lithium titanate material of Example 2;
Fig. 7 is a discharge capacity diagram of a lithium ion battery in which the hollow linear structure lithium titanate material of Example 2 is used as an electrode material at various charge and discharge rates;
Fig. 8 is an XRD pattern of the linear hierarchical structure lithium titanate material (a composite crystal phase of spinel-type lithium titanate and monoclinic lithium titanate) of Example 3;
Fig. 9 is an SEM image of the linear hierarchical structure lithium titanate material of Example 3;
Fig. 10 is an XRD pattern of the linear hierarchical structure lithium titanate material (a monoclinic lithium titanate crystal phase) of Example 4; and
Fig. 11 is a SEM image of the linear hierarchical structure lithium titanate material of Example 4.

### Detailed Description for the Invention

Hereinafter, the implementation of the invention and the beneficial effects thereof are described in detail by way of specific examples, which are intended to provide a better understanding of the essence and characteristics of the invention, but do not limit the implementable scope of the invention.

### Example 1

Firstly, 2 g of titanium isopropoxide was dispersed in 100 ml of water, and then 5 ml of 30% hydrogen peroxide was added thereto under stirring to form a suspension containing titanium peroxo-complex. Next, 3.5 g of lithium hydroxide was added to the above peroxo-complex suspension under stirring to form a pale-yellow transparent solution. Subsequently, the pale-yellow transparent solution was heated to 80°C and stirred at a constant temperature for 6 hours to obtain a linear structure lithium peroxotitanate as a white product. The reaction was stopped, and separation and drying were carried out to obtain the white solid. Subsequently, the above white solid was dispersed in 100 ml of water and subjected to a hydrothermal reaction at 120°C for 6 hours to obtain a linear hierarchical structure lithium titanate precursor. Finally, the linear hierarchical structure lithium titanate precursor obtained above was heated at 450°C for 4 hours, to obtain a linear hierarchical structure lithium titanate material.

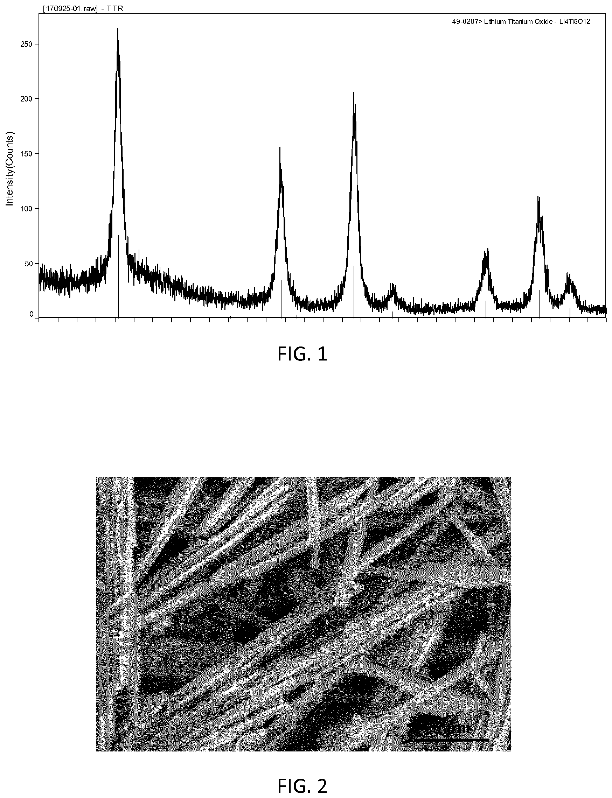

The XRD crystal phase pattern of the linear hierarchical structure lithium titanate material obtained in this example is shown in Fig. 1, which completely coincides with the standard spinel-type lithium titanate (PDF card No.: 49-0207) in its standard peaks. Thus, it is confirmed to be a spinel-type lithium titanate.

The low resolution SEM image of the linear hierarchical structure lithium titanate material obtained in this example is shown in Fig. 2. It can be seen that the linear structure is a solid linear structure and has an aspect ratio of greater than 10, wherein the linear structure having an aspect ratio of 10 to 100 accounts for up to 90% or more. It can also be seen from the Figure that the linear hierarchical structure lithium titanate material has a diameter of 20 nm to 1 µm and a length of 1 µm to 50 µm, wherein the linear structure with a diameter of 50 nm to 500 nm and a length of 5 µm to 20 µm accounts for up to 60%.

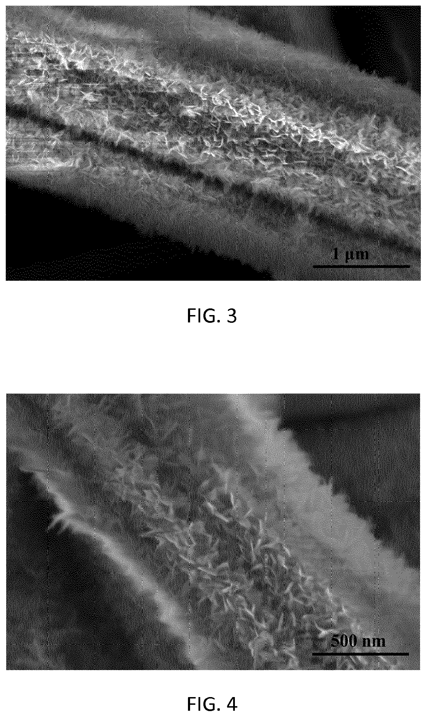

The high resolution SEM image of the linear hierarchical structure lithium titanate material obtained in this example is shown in Fig. 3. It can be seen that the linear structure is a linear hierarchical structure whose surface is composed of nanosheet particles. Nanosheets have a size of 5 nm to 300 nm, wherein the nanosheets having a size of 10 nm to 100 nm account for up to 80%.

The SEM image of the surface nanosheet components of the linear hierarchical structure lithium titanate material obtained in this example is shown in Fig. 4. It can be seen that the nanosheets have a thickness of 1 nm to 20 nm, wherein the nanosheets having a thickness of 1 nm to 10 nm account for up to 80%.

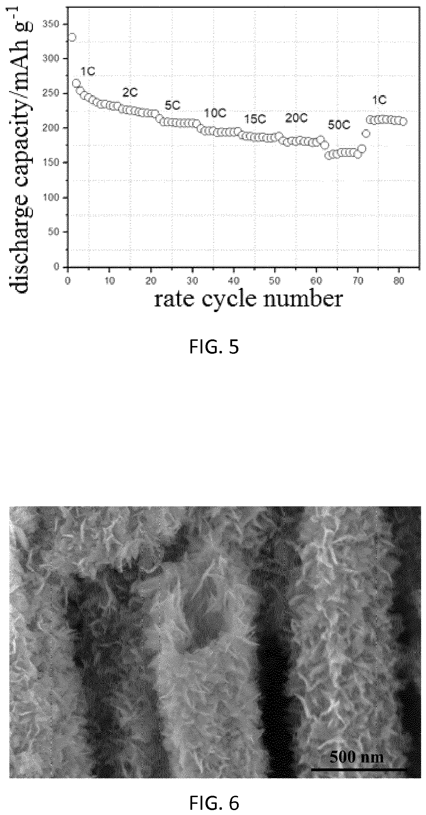

The results of a discharge capacity test of a lithium ion battery having the linear hierarchical structure lithium titanate material obtained in this example as an electrode material at different charge and discharge rates are shown in Fig. 5. The lithium ion battery electrode was prepared using knife coating process. Firstly, a slurry was prepared in a mass ratio of lithium titanate product : Super P : polyvinylidene fluoride (PVDF) = 7:2:1 with N- methylpyrrolidone (NMP) as solvent. Subsequently the slurry was uniformly applied on a copper foil using a knife coater, and then a model CR2032 button cell was assembled in a glove box with metallic lithium as a counter electrode, 1 mol/L LiPF₆/EC-DMC-EMC (1:1:1) as the electrolyte solution, and Glass Fiber as a separator and it was electrochemically tested. As can be seen from Fig. 5, the structure of the material has the following characteristics: (1) the linear structure has a large aspect ratio which is mainly 10 to 100, and can greatly reduce the grain boundary between the particles compared with the nanoparticles, facilitate the effective migration of electrons in the long-axis direction, and improve the overall conductivity of the electrode material; (2) the nanosheets of the sheet-like hierarchical structure mainly have a thickness of 1 to 10 nm, which gives a very short lithium ion migration path, and thus can quickly improve the intercalation and deintercalation process of lithium ions and enhance the rate charge and discharge performance; (3) the hierarchical structure has a large specific surface area of 78.3 m²/g, which facilitates the contact area between the electrolyte solution and the electrode, and reduces the current density; and (4) the linear hierarchical structure is easy to mix well with the conductive agent, thereby increasing the effective conductive contact among the wires and improving the effective transport of the electrons. Therefore, the lithium titanate material of this structure has excellent lithium ion battery charge and discharge performance, with the average battery capacities kept at 240, 218, 208, 196, 198, 186, 180 and 162 mAhg⁻¹ respectively at various charge and discharge rates of 1C, 2C, 5C, 10C, 15C, 20C and 50C. In particular, it can maintain a high discharge capacity of 162 mAhg⁻¹ at an ultrafast charge and discharge rate of 50C, which is much higher than other reported linear titanate materials.

### Example 2

Firstly, 2 g of tetrabutyl titanate was dispersed in 100 ml of water, and then 5 ml of 30% hydrogen peroxide was added thereto under stirring to form a suspension containing titanium peroxo-complex. Next, 3.5 g of lithium hydroxide was added to the above peroxo-complex suspension under stirring to form a pale-yellow transparent solution. Subsequently, the pale-yellow transparent solution was heated to 80°C and stirred at a constant temperature for 6 hours to obtain a linear structure lithium peroxotitanate as a white product. The reaction was stopped, and separation and drying were carried out to obtain the white solid. Subsequently, the above dried white solid was placed in an oven at 150°C and treated for 4 hours, to obtain a linear structure lithium peroxotitanate having peroxy removed on the surface thereof. Subsequently, the above white solid was dispersed in 100 ml of water and subjected to a hydrothermal reaction at 120°C for 6 hours to obtain a linear hierarchical structure lithium titanate precursor. Finally, the linear hierarchical structure lithium titanate precursor obtained above was heated at 450°C for 4 hours, to obtain a linear hierarchical structure lithium titanate material.

The XRD crystal phase pattern of the linear hierarchical structure lithium titanate material obtained in this example is consistent with Fig. 1, which completely coincides with the standard spinel-type lithium titanate (PDF card No. 49-0207) in its standard peaks. Thus, it is confirmed to be a spinel-type lithium titanate.

The SEM image of the linear hierarchical structure lithium titanate material obtained in this example is shown in Fig. 6. It can be seen that the linear structure is a hollow linear structure and has an aspect ratio of greater than 10, wherein the linear structure having an aspect ratio of 10 to 100 accounts for up to 90% or more. It can also be seen from the Figure that the linear hierarchical structure lithium titanate material has a diameter of 20 nm to 1 µm and a length of 1 µm to 50 µm, wherein the linear structure having a diameter of 50 nm to 500 nm and a length of 5 µm to 20 µm accounts for up to 60%. It can be seen from the Figure that the linear structure is a linear hierarchical structure whose surface is composed of nanosheet particles. The nanosheets have a size of 5 nm to 300 nm, wherein the nanosheets having a size of 10 nm to 100 nm account for up to 80%. It can also be seen from the Figure that nanosheets have a thickness of 1 nm to 20 nm, wherein the nanosheets having a thickness of 1 nm to 10 nm account for up to 80%.

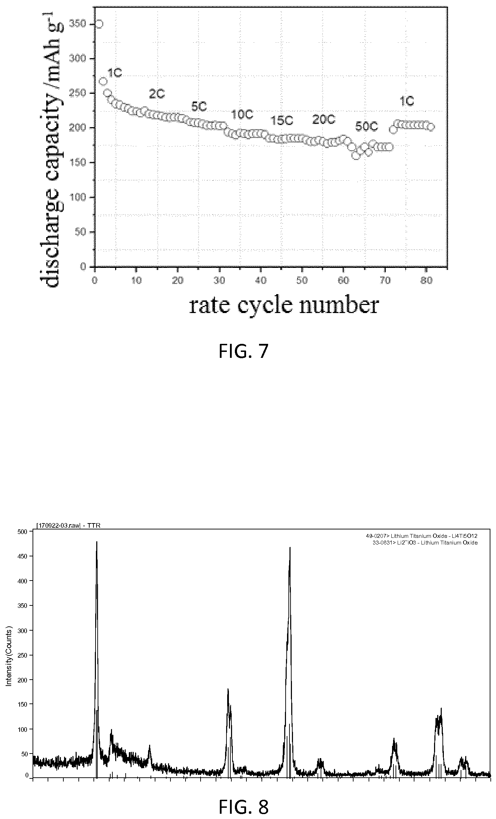

The results of a discharge capacity test of a lithium ion battery having the linear hierarchical structure lithium titanate material obtained in this example as an electrode material at different charge and discharge rates are shown in Fig. 5. The lithium ion battery electrode was prepared using knife coating process. Firstly, a slurry was prepared in a mass ratio of lithium titanate product : Super P : polyvinylidene fluoride (PVDF) = 7:2:1 with N-methylpyrrolidone (NMP) as solvent. Subsequently the slurry was uniformly applied on a copper foil using a knife coater, and then a model CR2032 button cell was assembled in a glove box with metallic lithium as a counter electrode, 1 mol/L LiPF₆/EC-DMC-EMC (1:1:1) as the electrolyte solution, and Glass Fiber as a separator and it was electrochemically tested. As can be seen from Fig. 7, the structure of the material has the following characteristics: (1) the linear structure has a large aspect ratio which is mainly 10 to 100, and can greatly reduce the grain boundary between the particles compared with the nanoparticles, facilitate the effective migration of electrons in the long-axis direction, and improve the overall conductivity of the electrode material; (2) the nanosheets of the sheet-like hierarchical structure mainly have a thickness of 1 to 10 nm, which gives a very short lithium ion migration path, and thus can quickly improve the intercalation and deintercalation process of lithium ions and enhance the rate charge and discharge performance; (3) due to having the hollow structure, the hierarchical structure has a large specific surface area of 90.7 m²/g, which facilitates the contact area between the electrolyte solution and the electrode, and reduces the current density; and (4) the linear hierarchical structure is easy to mix well with the conductive agent, thereby increasing the effective conductive contact among the wires and improving the effective transport of the electrons. Therefore, the lithium titanate material of this structure has excellent lithium ion battery charge and discharge performance, with the average battery capacities kept at 235, 225, 207, 193, 184, 180 and 173 mAhg⁻¹ respectively at various charge and discharge rates of 1C, 2C, 5C, 10C, 15C, 20C and 50C. In particular, it can maintain a high discharge capacity of 173 mAhg⁻¹ at an ultrafast charge and discharge rate of 50C, which is much higher than other reported linear titanate materials.

### Example 3

Firstly, 1 g of titanic acid was dispersed in 100 ml of water, and then 6 ml of 30% hydrogen peroxide was added thereto under stirring to form a suspension containing titanium peroxo-complex. Next, 4 g of lithium hydroxide was added to the above peroxo-complex suspension under stirring to form a pale-yellow transparent solution. Subsequently, the pale-yellow transparent solution was heated to 90°C and stirred at a constant temperature for 5 hours to obtain a linear structure lithium peroxotitanate as a white product. The reaction was stopped, and separation and drying were carried out to obtain the white solid. Subsequently, the above white solid was dispersed in 100 ml of an aqueous alcohol solution having a ratio of isopropanol to water of 1:5, and subjected to a hydrothermal reaction at 100°C for 8 hours, to obtain a linear hierarchical structure lithium titanate precursor. Finally, the linear hierarchical structure lithium titanate precursor obtained above was heated at 300°C for 6 hours, to obtain a linear hierarchical structure lithium titanate material.

The XRD crystal phase pattern of the linear hierarchical structure lithium titanate material obtained in this example is shown in Fig. 8, which coincides with the standard spinel-type lithium titanate (PDF card No.: 49-0207) and monoclinic lithium titanate (PDF card No.: 33-0831) crystal phase in its standard peaks. Thus, it is confirmed to be a composite crystal phase of spinel-type lithium titanate and monoclinic lithium titanate.

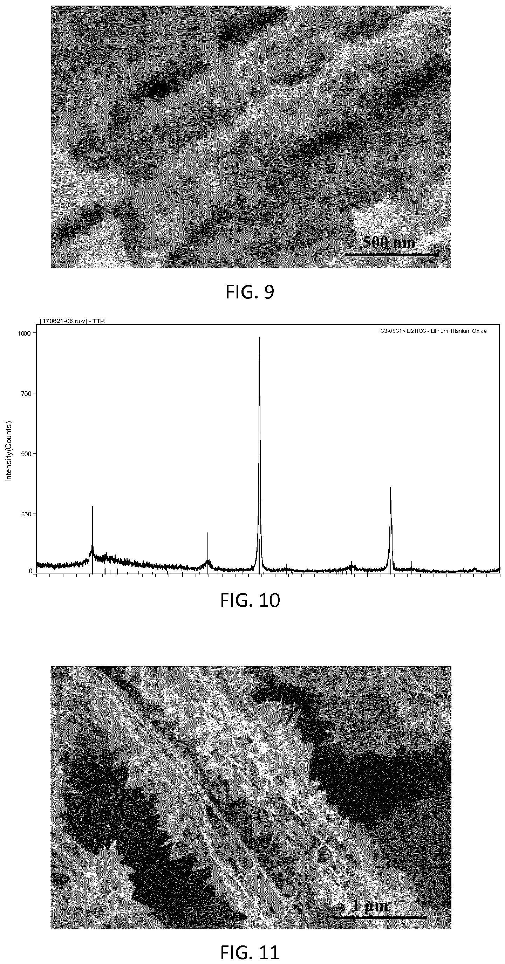

The SEM image of the linear hierarchical structure lithium titanate material obtained in this example is shown in Fig. 9. It can be seen that the linear structure is a solid linear structure and has an aspect ratio of greater than 10, wherein the linear structure having an aspect ratio of 10 to 100 accounts for up to 80% or more. It can also be seen from the Figure that the linear hierarchical structure lithium titanate material has a diameter of 20 nm to 1 µm and a length of 1 µm to 50 µm, wherein the linear structure with a diameter of 50 nm to 500 nm and a length of 5 µm to 20 µm accounts for up to 60%. It can be seen from the Figure that the linear structure is a linear hierarchical structure whose surface is composed of nanosheet particles. The nanosheets have a size of 5 nm to 300 nm, wherein the nanosheets having a size of 10 nm to 100 nm account for up to 80%. It can also be seen from the Figure that the nanosheets have a thickness of 1 nm to 20 nm, wherein the nanosheets having a thickness of 1 nm to 10 nm account for up to 80%.

A lithium ion battery prepared by using the linear hierarchical structure lithium titanate material of this example as an electrode was tested to have a capacity performance close to that of the testing results of Example 1.

### Example 4

Under stirring, 2 g of titanium oxysulfate was dispersed and dissolved into 100 ml of water to form a solution, then aqueous ammonia at a concentration of 0.1 mol/L was slowly added dropwise to the solution until the solution was neutral (pH is about 7), so that titanium oxysulfate was gradually and completely hydrolyzed to form a hydrated titanic acid precipitate. Subsequently, the hydrated titanic acid precipitate was ultrasonically dispersed, washed several times with deionized water, and separated by centrifugation. Thereafter, hydrogen peroxide and lithium hydroxide were dissolved in water to form an aqueous solution having a lithium hydroxide concentration of 0.8 mol/L and a hydrogen peroxide volume fraction of 3%. Subsequently, the separated hydrated titanic acid precipitate was dispersed in 100 ml of the above-prepared aqueous hydrogen hydroxide solution containing lithium hydroxide, and stirred to form a yellow transparent solution. Next, the above yellow transparent solution was heated to 70°C and then stirred under constant temperature for 10 hours, to obtain a linear structure lithium peroxotitanate white product. The reaction was stopped, and separation and drying were carried out to obtain the white solid. Subsequently, the above white solid was dispersed in 100 ml of an aqueous alcohol solution having a ratio of ethanol to water of 5:1, and subjected to a solvothermal reaction at 120°C for 12 hours, to obtain a linear hierarchical structure lithium titanate precursor. Finally, the linear hierarchical structure lithium titanate precursor obtained above was heated at 600°C for 3 hours, to obtain a linear hierarchical structure lithium titanate material.

The XRD crystal phase pattern of the linear hierarchical structure lithium titanate material obtained in this example is shown in Fig. 10, which coincides with the standard monoclinic lithium titanate (PDF card No.: 33-0831) crystal phase in its standard peaks. Thus, it is confirmed to be a monoclinic lithium titanate crystal phase.

The SEM image of the linear hierarchical structure lithium titanate material obtained in this example is shown in Fig. 11. It can be seen that the product has a linear structure, with a diameter of 20 nm to 1 µm, a length of 1 µm to 50 µm and an aspect ratio of larger than 10. The linear structure is a linear hierarchical structure whose surface is composed of nanosheet particles. The nanosheets have a size of 5 nm to 300 nm and a thickness of 1 nm to 20 nm.

A lithium ion battery prepared by using the linear hierarchical structure lithium titanate material of this example as an electrode was tested to have a capacity performance close to that of the testing results of Example 1.

### Example 5

Firstly, 0.3 g of titanium sulfate was dispersed in 100 ml of water, and then 2 g of urea peroxide was added thereto under stirring to form a suspension containing titanium peroxo-complex. Next, 1 g of lithium peroxide was added to the above peroxo-complex suspension under stirring to form a pale-yellow transparent solution. Subsequently, the pale-yellow transparent solution was heated to 60°C and stirred at a constant temperature for 24 hours to obtain a linear structure lithium peroxotitanate as a white product. The reaction was stopped, and separation and drying were carried out to obtain the white solid. Subsequently, the above white solid was dispersed in 100 ml of water, and subjected to a hydrothermal reaction at 100°C for 12 hours, to obtain a linear hierarchical structure lithium titanate precursor. Finally, the linear hierarchical structure lithium titanate precursor obtained above was heated at 350°C for 6 hours, to obtain a linear hierarchical structure lithium titanate material. The SEM image of the obtained linear hierarchical structure lithium titanate material is close to that of the product of Example 1.

A lithium ion battery prepared by using the linear hierarchical structure lithium titanate material of this example as an electrode was tested to have a capacity performance close to that of the testing results of Example 1.

### Example 6

Firstly, 8 g of titanic acid was dispersed in 100 ml of water, and then 25 ml of 30% hydrogen peroxide was added thereto under stirring to form a suspension containing titanium peroxo-complex. Next, 3 g of lithium oxide was added to the above peroxo-complex suspension under stirring to form a pale-yellow transparent solution. Subsequently, the pale-yellow transparent solution was heated to 100°C and stirred at a constant temperature for 1 hour to obtain a linear structure lithium peroxotitanate as a white product. The reaction was stopped, and separation and drying were carried out to obtain the white solid. Subsequently, the above white solid was dispersed in 100 ml of water, and subjected to a hydrothermal reaction at 150°C for 2 hours, to obtain a linear hierarchical structure lithium titanate precursor. Finally, the linear hierarchical structure lithium titanate precursor obtained above was heated at 700°C for 1 hour, to obtain a linear hierarchical structure lithium titanate material. The SEM image of the obtained linear hierarchical structure lithium titanate material is close to that of the product of Example 1.

A lithium ion battery prepared by using the linear hierarchical structure lithium titanate material of this example as an electrode was tested to have a capacity performance close to that of the testing results of Example 1.

### Example 7

Firstly, 3 g of hydrated titanium oxysulfate was dispersed in 100 ml of water, and then 5 ml of 30% peracetic acid was added thereto under stirring to form a suspension containing titanium peroxo-complex. Next, 3 g of lithium superoxide was added to the above peroxo-complex suspension under stirring to form a pale-yellow transparent solution. Subsequently, the pale-yellow transparent solution was heated to 90°C and stirred at a constant temperature for 3 hours to obtain a linear structure lithium peroxotitanate as a white product. The reaction was stopped, and separation and drying were carried out to obtain the white solid. Subsequently, the above white solid was dispersed in 100 ml of water having lithium hydroxide at a concentration of 0.1 mol/L, and subjected to a hydrothermal reaction at 140°C for 3 hours, to obtain a linear hierarchical structure lithium titanate precursor. Finally, the linear hierarchical structure lithium titanate precursor obtained above was heated at 650°C for 3 hours, to obtain a linear hierarchical structure lithium titanate material. The SEM image of the obtained linear hierarchical structure lithium titanate material is close to that of the product of Example 1.

A lithium ion battery prepared by using the linear hierarchical structure lithium titanate material of this example as an electrode was tested to have a capacity performance close to that of the testing results of Example 1.

### Example 8

Firstly, 3 g of tetrabutyl titanate was dispersed in 100 ml of water, and then 6 ml of 30% hydrogen peroxide was added thereto under stirring to form a suspension containing titanium peroxo-complex. Next, 3 g of lithium hydroxide was added to the above peroxo-complex suspension under stirring to form a pale-yellow transparent solution. Subsequently, the pale-yellow transparent solution was heated to 70°C and stirred at a constant temperature for 12 hours to obtain a linear structure lithium peroxotitanate as a white product. The reaction was stopped, and separation and drying were carried out to obtain the white solid. Subsequently, the above white solid was dispersed in 100 ml of water having nitric acid at a concentration of 0.1 mol/L, and subjected to a hydrothermal reaction at 110°C for 8 hours, to obtain a linear hierarchical structure lithium titanate precursor. Finally, the linear hierarchical structure lithium titanate precursor obtained above was heated at 600°C for 4 hours, to obtain a linear hierarchical structure lithium titanate material. The SEM image is close to that of the product of Example 1.

A lithium ion battery prepared by using the linear hierarchical structure lithium titanate material of this example as an electrode was tested to have a capacity performance close to that of the testing results of Example 1.

### Example 9

Firstly, 3 g of tetrabutyl titanate is dispersed in 100 ml of an aqueous hydroxypropyl methyl cellulose solution at a concentration of 0.1%, and then 6 ml of 30% hydrogen peroxide was added thereto under stirring to form a suspension containing titanium peroxo-complex. Next, 3 g of lithium hydroxide was added to the above peroxo-complex suspension under stirring to form a pale-yellow transparent solution. Subsequently, the pale-yellow transparent solution was heated to 75°C and stirred at a constant temperature for 10 hours to obtain a linear structure lithium peroxotitanate as a white product. The reaction was stopped, and separation and drying were carried out to obtain the white solid. Subsequently, the above white solid was dispersed in 100 ml of an aqueous alcohol solution having a ratio of methanol to water of 1:1, and subjected to a solvothermal reaction at 80°C for 24 hours, to obtain a linear hierarchical structure lithium titanate precursor. Finally, the linear hierarchical structure lithium titanate precursor obtained above was heated at 350°C for 8 hours, to obtain a linear hierarchical structure lithium titanate material. The SEM image of the obtained linear hierarchical structure lithium titanate material is close to that of the product of Example 1.

A lithium ion battery prepared by using the linear hierarchical structure lithium titanate material of this example as an electrode was tested to have a capacity performance close to that of the testing results of Example 1.

### Example 10

Firstly, 2 g of titanium isopropoxide is dispersed in 100 ml of an aqueous polyvinyl alcohol solution at a concentration of 0.5%, and then 5 ml of 30% hydrogen peroxide was added thereto under stirring to form a suspension containing titanium peroxo-complex. Next, 3.5 g of lithium hydroxide was added to the above peroxo-complex suspension under stirring to form a pale-yellow transparent solution. Subsequently, the pale-yellow transparent solution was heated to 85°C and stirred at a constant temperature for 6 hours to obtain a linear structure lithium peroxotitanate as a white product. The reaction was stopped, and separation and drying were carried out to obtain the white solid. Subsequently, the above white solid was dispersed in 100 ml of water, and subjected to a hydrothermal reaction at 120°C for 6 hours, to obtain a linear hierarchical structure lithium titanate precursor. Finally, the linear hierarchical structure lithium titanate precursor obtained above was immersed in 50 ml of a glucose solution having a concentration of 1 mol/L, centrifuged and dried, and then heated in an inert atmosphere at 550°C for 4 hours to obtain a carbon-supported linear hierarchical structure lithium titanate material. The SEM image of the obtained linear hierarchical structure lithium titanate material is close to that of the product of Example 1.

A lithium ion battery prepared by using the linear hierarchical structure lithium titanate material of this example as an electrode was tested to have a capacity performance close to that of the testing results of Example 1.

### Example 11

Firstly, 1.5 g of titanium isopropoxide was dispersed in 100 ml of water, and then 4 ml of 30% hydrogen peroxide was added thereto under stirring to form a suspension containing titanium peroxo-complex. Next, 3 g of lithium hydroxide was added to the above peroxo-complex suspension under stirring to form a pale-yellow transparent solution. Subsequently, the pale-yellow transparent solution was heated to 75°C and stirred at a constant temperature for 8 hours to obtain a linear structure lithium peroxotitanate as a white product. The reaction was stopped, and separation and drying were carried out to obtain the white solid. Subsequently, the above dried white solid was placed in an oven at 150°C and treated for 4 hours, to obtain a linear structure lithium peroxotitanate having peroxy removed on the surface thereof. Subsequently, the above white solid was dispersed in 100 ml of water and subjected to a hydrothermal reaction at 120°C for 6 hours to obtain a linear hierarchical structure lithium titanate precursor. Finally, the linear hierarchical structure lithium titanate precursor obtained above was heated at 450°C for 4 hours, to obtain a linear hierarchical structure lithium titanate material. The SEM image of the obtained linear hierarchical structure lithium titanate material is close to that of the product of Example 1.

A lithium ion battery prepared by using the linear hierarchical structure lithium titanate material of this example as an electrode was tested to have a capacity performance close to that of the testing results of Example 1.

### Example 12

Firstly, 0.5 g of titanium sulfate was dispersed in 100 ml of water, and then 2.5 g of urea peroxide was added thereto under stirring to form a suspension containing titanium peroxo-complex. Next, 1.2 g of lithium peroxide was added to the above peroxo-complex suspension under stirring to form a pale-yellow transparent solution. Subsequently, the pale-yellow transparent solution was heated to 65°C and stirred at a constant temperature for 20 hours to obtain a linear structure lithium peroxotitanate as a white product. The reaction was stopped, and separation and drying were carried out to obtain the white solid. Subsequently, the above dried white solid was placed in an oven at 200°C and treated for 1 hour, to obtain a linear structure lithium peroxotitanate having peroxy removed on the surface thereof. Subsequently, the above white solid was dispersed in 100 ml of water, and subjected to a hydrothermal reaction at 150°C for 2 hours, to obtain a linear hierarchical structure lithium titanate precursor. Finally, the linear hierarchical structure lithium titanate precursor obtained above was heated at 550°C for 3 hours, to obtain a linear hierarchical structure lithium titanate material. The SEM image of the obtained linear hierarchical structure lithium titanate material is close to that of the product of Example 1.

A lithium ion battery prepared by using the linear hierarchical structure lithium titanate material of this example as an electrode was tested to have a capacity performance close to that of the testing results of Example 1.

### Example 13

Firstly, 8 g of titanic acid was dispersed in 100 ml of water, and then 25 ml of 30% hydrogen peroxide was added thereto under stirring to form a suspension containing titanium peroxo-complex. Next, 3 g of lithium oxide was added to the above peroxo-complex suspension under stirring to form a pale-yellow transparent solution. Subsequently, the pale-yellow transparent solution was heated to 100°C and stirred at a constant temperature for 2 hours to obtain a linear structure lithium peroxotitanate as a white product. The reaction was stopped, and separation and drying were carried out to obtain the white solid. Subsequently, the above dried white solid was placed in an oven at 120°C and treated for 10 hours, to obtain a linear structure lithium peroxotitanate having peroxy removed on the surface thereof. Subsequently, the above white solid was dispersed in 100 ml of water, and subjected to a hydrothermal reaction at 100°C for 12 hours, to obtain a linear hierarchical structure lithium titanate precursor. Finally, the linear hierarchical structure lithium titanate precursor obtained above was heated at 350°C for 8 hours, to obtain a linear hierarchical structure lithium titanate material. The SEM image of the obtained linear hierarchical structure lithium titanate material is close to that of the product of Example 1.

A lithium ion battery prepared by using the linear hierarchical structure lithium titanate material of this example as an electrode was tested to have a capacity performance close to that of the testing results of Example 1.

### Example 14

Firstly, 2.5 g of titanium isopropoxide was dispersed in 100 ml of an aqueous polyvinyl alcohol solution at a concentration of 0.8%, and then 6 ml of 30% hydrogen peroxide was added thereto under stirring to form a suspension containing titanium peroxo-complex. Next, 4 g of lithium hydroxide was added to the above peroxo-complex suspension under stirring to form a pale-yellow transparent solution. Subsequently, the pale-yellow transparent solution was heated to 80°C and stirred at a constant temperature for 8 hours to obtain a linear structure lithium peroxotitanate as a white product. The reaction was stopped, and separation and drying were carried out to obtain the white solid. Subsequently, the above dried white solid was placed in an oven at 180°C and treated for 2 hours, to obtain a linear structure lithium peroxotitanate having peroxy removed on the surface thereof. Subsequently, the above white solid was dispersed in 100 ml of an aqueous alcohol solution having a ratio of ethanol to water of 1:1, and subjected to a solvothermal reaction at 150°C for 1 hour, to obtain a linear hierarchical structure lithium titanate precursor. Next, the linear hierarchical structure lithium titanate precursor obtained above was heated at 650°C for 3 hours to obtain a linear hierarchical structure lithium titanate material. Finally, the linear hierarchical structure lithium titanate precursor obtained above was immersed in 50 ml of an aqueous graphene oxide solution having a concentration of 0.1%, and dried, and then subjected to an annealing treatment in an inert atmosphere at 500°C for 5 hours to obtain a graphene-supported linear hierarchical structure lithium titanate material. The SEM image of the obtained linear hierarchical structure lithium titanate material is close to that of the product of Example 1.

A lithium ion battery prepared by using the linear hierarchical structure lithium titanate material of this example as an electrode was tested to have a capacity performance close to that of the testing results of Example 1.

### Example 15

Under stirring, 0.5 g of titanium tetrachloride was dispersed and dissolved into 100 ml of water to form a solution, then an aqueous sodium hydroxide solution at a concentration of 0.01 mol/L was slowly added dropwise to the solution until the solution was neutral (pH is about 7), so that titanium tetrachloride was gradually and completely hydrolyzed to form a hydrated titanic acid precipitate. Subsequently, the hydrated titanic acid precipitate was ultrasonically dispersed, washed several times with deionized water, and separated by centrifugation. Thereafter, hydrogen peroxide and lithium hydroxide were dissolved in water to form an aqueous solution having a lithium hydroxide concentration of 0.4 mol/L and a hydrogen peroxide volume fraction of 1%. Subsequently, the separated hydrated titanic acid precipitate was dispersed in 100 ml of the above-prepared aqueous hydrogen hydroxide solution containing lithium hydroxide under stirring to form a yellow transparent solution. Next, the above yellow transparent solution was heated to 60°C and then stirred at constant temperature for 24 hours. The reaction was stopped, and separation and drying were carried out to obtain the white solid. Subsequently, the above white solid was dispersed in 100 ml of water, and subjected to a hydrothermal reaction at 130°C for 5 hours, to obtain a linear hierarchical structure lithium titanate precursor. Finally, the linear hierarchical structure lithium titanate precursor obtained above was heated at 400°C for 5 hours, to obtain a linear hierarchical structure lithium titanate material. The SEM image of the obtained linear hierarchical structure lithium titanate material is close to that of the product of Example 1.

A lithium ion battery prepared by using the linear hierarchical structure lithium titanate material of this example as an electrode was tested to have a capacity performance close to that of the testing results of Example 1.

### Example 16

Under stirring, 5 g of titanium sulfate was dispersed and dissolved into 100 ml of water to form a solution, then an aqueous potassium hydroxide solution at a concentration of 0.5 mol/L was slowly added dropwise to the solution until the solution was neutral (pH is about 7), so that titanium sulfate was gradually and completely hydrolyzed to form a hydrated titanic acid precipitate. Subsequently, the hydrated titanic acid precipitate was ultrasonically dispersed, washed several times with deionized water, and separated by centrifugation. Thereafter, hydrogen peroxide and lithium hydroxide were dissolved in water to form an aqueous solution having a lithium hydroxide concentration of 1.0 mol/L and a hydrogen peroxide volume fraction of 8%. Subsequently, the separated hydrated titanic acid precipitate was dispersed in 100 ml of the above-prepared aqueous hydrogen hydroxide solution containing lithium hydroxide under stirring to form a yellow transparent solution. Next, the above yellow transparent solution was heated to 100°C and then stirred at constant temperature for 1 hour. The reaction was stopped, and separation and drying were carried out to obtain the white solid. Subsequently, the above white solid was dispersed in 100 ml of water, and subjected to a hydrothermal reaction at 140°C for 4 hours, to obtain a linear hierarchical structure lithium titanate precursor. Finally, the linear hierarchical structure lithium titanate precursor obtained above was heated at 600°C for 3 hours, to obtain a linear hierarchical structure lithium titanate material. The SEM image of the obtained linear hierarchical structure lithium titanate material is close to that of the product of Example 1.

A lithium ion battery prepared by using the linear hierarchical structure lithium titanate material of this example as an electrode was tested to have a capacity performance close to that of the testing results of Example 1.

### Example 17

Under stirring, 1 g of titanium isopropoxide was dispersed in 100 ml of an aqueous solution for direct hydrolysis to form a hydrated titanic acid precipitate. Subsequently, the hydrated titanic acid precipitate was ultrasonically dispersed, washed several times with deionized water, and separated by centrifugation. Thereafter, hydrogen peroxide and lithium hydroxide were dissolved in water to form an aqueous solution having a lithium hydroxide concentration of 0.6 mol/L and a hydrogen peroxide volume fraction of 2%. Subsequently, the separated hydrated titanic acid precipitate was dispersed in 100 ml of the above-prepared aqueous hydrogen hydroxide solution containing lithium hydroxide under stirring to form a yellow transparent solution. Next, the above yellow transparent solution was heated to 85°C and then stirred at constant temperature for 5 hours. The reaction was stopped, and separation and drying were carried out to obtain the white solid. Subsequently, the above dried white solid was placed in an oven at 160°C and treated for 3 hours, to obtain a linear structure lithium peroxotitanate having peroxy removed on the surface thereof. Subsequently, the above white solid was dispersed in 100 ml of water and subjected to a hydrothermal reaction at 130°C for 5 hours to obtain a linear hierarchical structure lithium titanate precursor. Finally, the linear hierarchical structure lithium titanate precursor obtained above was heated at 350°C for 8 hours, to obtain a linear hierarchical structure lithium titanate material. The SEM image of the obtained linear hierarchical structure lithium titanate material is close to that of the product of Example 1.

A lithium ion battery prepared by using the linear hierarchical structure lithium titanate material of this example as an electrode was tested to have a capacity performance close to that of the testing results of Example 1.

### Example 18

Under stirring, 3 g of tetrabutyl titanate was dispersed in 100 ml of an aqueous solution for direct hydrolysis to form a hydrated titanic acid precipitate. Subsequently, the hydrated titanic acid precipitate was ultrasonically dispersed, washed several times with deionized water, and separated by centrifugation. Thereafter, hydrogen peroxide and lithium hydroxide were dissolved in water to form an aqueous solution having a lithium hydroxide concentration of 0.7 mol/L and a hydrogen peroxide volume fraction of 4%. Subsequently, the separated hydrated titanic acid precipitate was dispersed in 100 ml of the above-prepared aqueous hydrogen hydroxide solution containing lithium hydroxide under stirring to form a yellow transparent solution. Next, the above yellow transparent solution was heated to 70°C and then stirred at constant temperature for 6 hours. The reaction was stopped, and separation and drying were carried out to obtain the white solid. Subsequently, the above dried white solid was placed in an oven at 130°C and treated for 10 hours, to obtain a linear structure lithium peroxotitanate having peroxy removed on the surface thereof. Subsequently, the above white solid was dispersed in 100 ml of an aqueous alcohol solution having a ratio of ethanol to water of 1:1 and subjected to a solvothermal reaction at 100°C for 8 hours to obtain a linear hierarchical structure lithium titanate precursor. Finally, the linear hierarchical structure lithium titanate precursor obtained above was heated at 550°C for 4 hours, to obtain a linear hierarchical structure lithium titanate material. The SEM image of the obtained linear hierarchical structure lithium titanate material is close to that of the product of Example 1.

A lithium ion battery prepared by using the linear hierarchical structure lithium titanate material of this example as an electrode was tested to have a capacity performance close to that of the testing results of Example 1.

## Claims

1. A linear hierarchical structure lithium titanate material, wherein the crystal phase of the lithium titanate material is a spinel-type crystal phase or a monoclinic crystal phase or a composite crystal phase thereof; the lithium titanate material is mainly composed of a linear hierarchical structure; the linear hierarchical structure has an aspect ratio larger than 10, preferably, the linear hierarchical structure has an aspect ratio of 10 to 100; and the surface components of the linear hierarchical structure lithium titanate material are nanosheets, preferably, the surface of the linear hierarchical structure lithium titanate material is further loaded with one or more selected from the group consisting of carbon, carbon nanotubes, graphene, black phosphorus, metals, and semiconductors; preferably, the linear hierarchical structure of lithium titanate is a solid linear structure or a hollow linear structure;
wherein the nanosheets have a size of 5 nm to 300 nm, and the nanosheets have a thickness of 1 nm to 20 nm.

2. The linear hierarchical structure lithium titanate material according to claim 1, wherein the linear hierarchical structure has a diameter of 20 nm to 1 µm and a length of 1 µm to 50 µm.

3. The linear hierarchical structure lithium titanate material according to claim 1 or 2, wherein the linear hierarchical structure has a diameter of 50 nm to 500 nm and a length of 5 µm to 20 µm.

4. The linear hierarchical structure lithium titanate material according to any preceding claim, wherein the nanosheets have a size of 10 nm to 100 nm.

5. The linear hierarchical structure lithium titanate material according to any preceding claim, wherein the nanosheets have a thickness of 1 nm to 10 nm.

6. The linear hierarchical structure lithium titanate material according to any preceding claim, wherein the linear hierarchical structure lithium titanate material is produced by a preparation method comprising the following steps:
(1) preparing a linear structure lithium peroxotitanate;
(2) subjecting the linear structure lithium peroxotitanate obtained in the step (1) to a hydrothermal reaction or a solvothermal reaction to obtain a linear hierarchical structure lithium titanate precursor; preferably, the reaction system of the hydrothermal reaction is selected from a pure water system, an acidic water system or an alkaline water system; and the hydrothermal reaction is carried out at a temperature of 100°C to 150°C for 1h to 24h; preferably, the solvothermal reaction is selected from an aqueous alcohol solution system or an alcohol solution system; and the solvothermal reaction is carried out at a temperature of 80°C to 150°C for 1h to 24h;
(3) subjecting the linear hierarchical structure lithium titanate precursor obtained in the step (2) to an annealing treatment to obtain the linear hierarchical structure lithium titanate material; preferably, the annealing treatment is carried out at a temperature of 300°C to 700°C for 1h to 24h.

7. The linear hierarchical structure lithium titanate material according to claim 6, wherein the method further comprises the preparation of a linear structure lithium peroxotitanate, comprising the followings steps:
(a1) preparing a dispersion containing titanium peroxo-complex; preferably, the titanium peroxo-complex in the dispersion containing titanium peroxo-complex has a concentration of 0.01 mol/L to 1 mol/L, preferably 0.05 mol/L to 0.5 mol/L;
(b1) adding a lithium compound into the dispersion containing titanium peroxo-complex obtained in the step (a1) to form a solution; preferably, the lithium compound is selected from one or more of lithium hydroxide, lithium oxide, lithium peroxide, and lithium superoxide; preferably, the lithium compound is added in an amount such that the concentration of lithium ions in the solution formed by adding the lithium compound is 0.4 mol/L to 2.0 mol/L;
(c1) subjecting the solution obtained in the step (b1) to a reaction under heating to obtain the linear structure lithium peroxotitanate;
alternatively, comprising the followings steps:
(a2) subjecting a titanium source to a hydrolysis reaction to form a hydrated titanic acid precipitate; preferably, the titanium source is selected from one or more of titanium ethoxide, titanium isopropoxide, tetrabutyl titanate, titanium glycolate, titanium glyceroxide, titanium sulfate, titanium oxysulfate, titanium tetrachloride, titanium tetrafluoride, ammonium fluorotitanate, titanium nitride, titanic acid, and industrial titanium-containing compounds;
(b2) dispersing the hydrated titanic acid precipitate obtained in the step (a2) in an aqueous hydrogen peroxide solution containing lithium hydroxide, and stirring to form a solution; preferably, the concentration of lithium hydroxide in the aqueous hydrogen hydroxide solution containing lithium hydroxide is 0.4 mol/L to 2.0 mol/L, more preferably 1.0 mol/L to 1.5 mol/L; preferably, the volume fraction of hydrogen peroxide in the aqueous hydrogen hydroxide solution containing lithium hydroxide is 0.5% to 10%, more preferably 1% to 3%;
(c2) subjecting the solution obtained in the step (b2) to a reaction under heating to obtain the linear structure lithium peroxotitanate;
preferably, in the step (c1) and the step (c2), the reaction under heating is independently carried out at a temperature of 60°C to 100°C for 0.5 h to 24 h.

8. The linear hierarchical structure lithium titanate material according to claim 7, wherein the method further comprises subjecting the linear structure lithium peroxotitanate obtained in the step (c1) and the step (c2) to a low-temperature treatment for decomposition and removal of peroxy on the surface of the linear structure lithium peroxotitanate, to obtain the linear structure lithium peroxotitanate having peroxy removed on the surface thereof; preferably, the low-temperature treatment is carried out at a temperature of 120°C to 200°C for 1h to 12h.

9. The linear hierarchical structure lithium titanate material according to claim 7, wherein the method further comprises the process for preparing a dispersion containing titanium peroxo-complex, comprising the step of: dispersing a titanium compound into an aqueous peroxide solution to form a dispersion, so as to obtain the dispersion containing titanium peroxo-complex; preferably, the titanium compound is selected from one or more of metallic titanium, titanium ethoxide, titanium isopropoxide, tetrabutyl titanate, titanium glycolate, titanium glyceroxide, titanium sulfate, titanium oxysulfate, titanium tetrachloride, titanium tetrafluoride, ammonium fluorotitanate, titanium nitride, titanium oxide, and titanic acid; preferably, the peroxide is selected from one or more of hydrogen peroxide, urea peroxide and peracetic acid.

10. The linear hierarchical structure lithium titanate material according to claim 9, wherein the method further comprises, after dispersing a titanium compound into an aqueous peroxide solution to form a dispersion, adding a polymer into the dispersion, to obtain the dispersion containing titanium peroxo-complex; preferably, the polymer is selected from one or more of chitosan, guar, methyl cellulose, ethyl cellulose, hydroxyethyl cellulose, hydroxypropyl cellulose, hydroxypropyl methyl cellulose, polyvinyl alcohol, polyacrylamide, polyethylene oxide, polyethylene glycol, and polyvinylpyrrolidone; preferably, the polymer is added in an amount such that the content of the polymer in the obtained dispersion containing titanium peroxo-complex is 0.01% to 10% by mass, preferably 0.1% to 10% by mass.

11. The linear hierarchical structure lithium titanate material according to any of claims 7 to 10, wherein in the step (a2), the hydrolysis reaction comprises dispersing the titanium source in water for hydrolysis to produce a hydrated titanic acid precipitate, or the hydrolysis reaction comprises dispersing the titanium source in an aqueous solution containing an alkaline substance for hydrolysis to produce a hydrated titanic acid precipitate, preferably, the alkaline substance is selected from one or more of aqueous ammonia, sodium hydroxide, potassium hydroxide, tetramethylammonium hydroxide, tetraethylammonium hydroxide, tetrapropylammonium hydroxide, tetrabutylammonium hydroxide, ethylenediamine, diethylamine, triethylamine, ethylamine, ethanolamine, and diethanolamine.

12. The linear hierarchical structure lithium titanate material according to any of claims 7 to 11, the step (a2) further comprises a step of purifying the obtained hydrated titanic acid precipitate crude product after hydrolysis and using the purified hydrated titanic acid precipitate in the step (b2), preferably, the purified hydrated titanic acid having a purity of 97% or more; wherein the purification is selected from one or more of water washing - separation by centrifugation, water washing - membrane separation, water washing - filtration and dialysis.

13. The linear hierarchical structure lithium titanate material according to any one of claims 6 to 12, wherein the method further comprises a step of loading the surface of the obtained linear hierarchical structure lithium titanate material with one or more of carbon, carbon nanotubes, graphene, black phosphorus, metals and semiconductors, when the linear hierarchical structure lithium titanate material is obtained after the annealing treatment in the step (3).

14. A method for preparing the linear hierarchical structure lithium titanate material according to any one of claims 6 to 13, wherein the method comprises the steps of:
(1) preparing a linear structure lithium peroxotitanate;
(2) subjecting the linear structure lithium peroxotitanate obtained in the step (1) to a hydrothermal reaction or a solvothermal reaction to obtain a linear hierarchical structure lithium titanate precursor;
(3) subjecting the linear hierarchical structure lithium titanate precursor obtained in the step (2) to an annealing treatment to obtain the linear hierarchical structure lithium titanate material.

15. An electrode material for ion battery, wherein the electrode material is mainly composed of the linear hierarchical structure lithium titanate material according to any one of claims 1 to 13, preferably, the ion battery is selected from lithium ion battery, sodium ion battery, potassium ion battery, or magnesium ion battery.

## Patentansprüche

1. Lithiumtitanatmaterial mit linearer hierarchischer Struktur, wobei die Kristallphase des Lithiumtitanatmaterials eine Kristallphase vom Spinelltyp oder eine monokline Kristallphase oder eine zusammengesetzte Kristallphase davon ist; das Lithiumtitanatmaterial hauptsächlich aus einer linearen hierarchischen Struktur besteht; die lineare hierarchische Struktur ein Seitenverhältnis größer als 10 aufweist, die lineare hierarchische Struktur bevorzugt ein Seitenverhältnis von 10 zu 100 aufweist; und die Oberflächenkomponenten des Lithiumtitanatmaterials mit linearer hierarchischer Struktur Nanoblätter sind, die Oberfläche des Lithiumtitanatmaterials mit linearer hierarchischer Struktur bevorzugt ferner mit einem oder mehreren ausgewählt aus der Gruppe bestehend aus Kohlenstoff, Kohlenstoffnanoröhren, Graphen, schwarzem Phosphor, Metallen und Halbleitern beladen ist; die lineare hierarchische Struktur von Lithiumtitanat bevorzugt eine feste lineare Struktur oder eine hohle lineare Struktur ist;
wobei die Nanoblätter eine Größe von 5 nm bis 300 nm aufweisen und die Nanoblätter eine Dicke von 1 nm bis 20 nm aufweisen.

2. Lithiumtitanatmaterial mit linearer hierarchischer Struktur nach Anspruch 1, wobei die lineare hierarchische Struktur einen Durchmesser von 20 nm bis 1 µm und eine Länge von 1 µm bis 50 µm aufweist.

3. Lithiumtitanatmaterial mit linearer hierarchischer Struktur nach Anspruch 1 oder 2, wobei die lineare hierarchische Struktur einen Durchmesser von 50 nm bis 500 nm und eine Länge von 5 µm bis 20 µm aufweist.

4. Lithiumtitanatmaterial mit linearer hierarchischer Struktur nach einem vorhergehenden Anspruch, wobei die Nanoblätter eine Größe von 10 nm bis 100 nm aufweisen.

5. Lithiumtitanatmaterial mit linearer hierarchischer Struktur nach einem vorhergehenden Anspruch, wobei die Nanoblätter eine Dicke von 1 nm bis 10 nm aufweisen.

6. Lithiumtitanatmaterial mit linearer hierarchischer Struktur nach einem vorhergehenden Anspruch, wobei das Lithiumtitanatmaterial mit linearer hierarchischer Struktur durch ein Herstellungsverfahren hergestellt wird, das die folgenden Schritte umfasst:
(1) Herstellen eines Lithiumperoxotitanats mit linearer Struktur;
(2) Unterziehen des in dem Schritt (1) erhaltenen Lithiumperoxotitanats mit linearer Struktur einer hydrothermalen Reaktion oder einer solvothermalen Reaktion, um einen Lithiumtitanat-Vorläufer mit linearer hierarchischer Struktur zu erhalten; wobei das Reaktionssystem der hydrothermalen Reaktion bevorzugt ausgewählt ist aus einem reinen Wassersystem, einem sauren Wassersystem oder einem alkalischen Wassersystem; und die hydrothermale Reaktion bei einer Temperatur von 100 °C bis 150 °C für 1h bis 24h durchgeführt wird; wobei die solvothermale Reaktion bevorzugt ausgewählt ist aus einem wässrigen Alkohollösungssystem oder einem Alkohollösungssystem; und die solvothermale Reaktion bei einer Temperatur von 80 °C bis 150 °C für 1h bis 24h durchgeführt wird;
(3) Unterziehen des in dem Schritt (2) erhaltenen Lithiumtitanat-Vorläufers mit linearer hierarchischer Struktur einer Glühbehandlung, um das Lithiumtitanatmaterial mit linearer hierarchischer Struktur zu erhalten; wobei die Glühbehandlung bevorzugt bei einer Temperatur von 300 °C bis 700 °C für 1h bis 24h durchgeführt wird.

7. Lithiumtitanatmaterial mit linearer hierarchischer Struktur nach Anspruch 6, wobei das Verfahren ferner die Herstellung eines Lithiumperoxotitanats mit linearer Struktur umfasst, umfassend die folgenden Schritte:
(a1) Herstellen einer Dispergierung, die Titan-Peroxo-Komplex enthält; wobei der Titan-Peroxo-Komplex in der Dispergierung, die Titan-Peroxo-Komplex enthält, bevorzugt eine Konzentration von 0,01 mol/l bis 1 mol/l, bevorzugt 0,05 mol/l bis 0,5 mol/l aufweist;
(b1) Hinzufügen einer Lithiumverbindung zu der Dispergierung, die Titan-Peroxo-Komplex enthält, die in dem Schritt (a1) erhalten wurde, um eine Lösung zu bilden; wobei die Lithiumverbindung bevorzugt ausgewählt ist aus einem oder mehreren von Lithiumhydroxid, Lithiumoxid, Lithiumperoxid und Lithiumsuperoxid; wobei die Lithiumverbindung bevorzugt in einer Menge hinzugefügt wird, sodass die Konzentration von Lithiumionen in der durch Hinzufügen der Lithiumverbindung gebildeten Lösung 0,4 mol/l bis 2,0 mol/l ist;
(c1) Unterziehen der in dem Schritt (b1) erhaltenen Lösung einer Reaktion unter Erhitzen, um das Lithiumperoxotitanat mit linearer Struktur zu erhalten;
alternativ umfassend die folgenden Schritte:
(a2) Unterziehen einer Titanquelle einer Hydrolysereaktion, um ein hydratisiertes Titansäurepräzipitat zu bilden; wobei die Titanquelle bevorzugt ausgewählt ist aus einem oder mehreren von Titanethoxid, Titanisopropoxid, Tetrabutyltitanat, Titanglykolat, Titanglyceroxid, Titansulfat, Titanoxysulfat, Titantetrachlorid, Titantetrafluorid, Ammoniumfluortitanat, Titannitrid, Titansäure und industriellen titanhaltigen Verbindungen;
(b2) Dispergieren des in dem Schritt (a2) erhaltenen hydratisierten Titansäurepräzipitats in einer wässrigen Wasserstoffperoxidlösung, die Lithiumhydroxid enthält, und Rühren, um eine Lösung zu bilden; wobei die Konzentration von Lithiumhydroxid in der wässrigen Wasserstoffhydroxidlösung, die Lithiumhydroxid enthält, bevorzugt 0,4 mol/l bis 2,0 mol/l ist, bevorzugter 1,0 mol/l bis 1,5 mol/l; wobei der Volumenanteil von Wasserstoffperoxid in der wässrigen Wasserstoffhydroxidlösung, die Lithiumhydroxid enthält, bevorzugt 0,5 % bis 10 %, bevorzugter 1 % bis 3 % ist;
(c2) Unterziehen der in dem Schritt (b2) erhaltenen Lösung einer Reaktion unter Erhitzen, um das Lithiumperoxotitanat mit linearer Struktur zu erhalten;
wobei in dem Schritt (c1) und dem Schritt (c2) bevorzugt die Reaktion unter Erhitzen unabhängig bei einer Temperatur von 60 °C bis 100 °C für 0,5 h bis 24 h durchgeführt wird.

8. Lithiumtitanatmaterial mit linearer hierarchischer Struktur nach Anspruch 7, wobei das Verfahren ferner das Unterziehen des Lithiumperoxotitanats mit linearer Struktur, das in dem Schritt (c1) und dem Schritt (c2) erhalten wird, einer Niedertemperaturbehandlung zur Zersetzung und Entfernung von Peroxy an der Oberfläche des Lithiumperoxotitanats mit linearer Struktur umfasst, um das Lithiumperoxotitanat mit linearer Struktur zu erhalten, auf dessen Oberfläche Peroxy entfernt ist; wobei die Niedertemperaturbehandlung bevorzugt bei einer Temperatur von 120 °C bis 200 °C für 1h bis 12h durchgeführt wird.

9. Lithiumtitanatmaterial mit linearer hierarchischer Struktur nach Anspruch 7, wobei das Verfahren ferner den Prozess zum Herstellen einer Dispergierung umfasst, die Titan-Peroxo-Komplex enthält, den folgenden Schritt umfassend: Dispergieren einer Titanverbindung in eine wässrige Peroxidlösung, um eine Dispergierung zu bilden, um die Dispergierung zu erhalten, die Titan-Peroxo-Komplex enthält; wobei die Titanverbindung bevorzugt aus einem oder mehreren von metallischem Titan, Titanethoxid, Titanisopropoxid, Tetrabutyltitanat, Titanglykolat, Titanglyceroxid, Titansulfat, Titanoxysulfat, Titantetrachlorid, Titantetrafluorid, Ammoniumfluortitanat, Titannitrid, Titanoxid und Titansäure ausgewählt ist; wobei das Peroxid bevorzugt aus einem oder mehreren von Wasserstoffperoxid, Harnstoffperoxid und Peressigsäure ausgewählt ist.

10. Lithiumtitanatmaterial mit linearer hierarchischer Struktur nach Anspruch 9, wobei das Verfahren ferner nach dem Dispergieren einer Titanverbindung in eine wässrige Peroxidlösung, um eine Dispergierung zu bilden, das Hinzufügen eines Polymers in die Dispergierung umfasst, um die Dispergierung zu erhalten, die Titan-Peroxo-Komplex enthält; wobei das Polymer bevorzugt aus einem oder mehreren von Chitosan, Guar, Methylcellulose, Ethylcellulose, Hydroxyethylcellulose, Hydroxypropylcellulose, Hydroxypropylmethylcellulose, Polyvinylalkohol, Polyacrylamid, Polyethylenoxid, Polyethylenglykol und Polyvinylpyrrolidon ausgewählt ist; wobei das Polymer bevorzugt in einer Menge hinzugefügt wird, sodass der Gehalt des Polymers in der erhaltenen Dispergierung, die Titan-Peroxo-Komplex enthält, 0,01 Masse-% bis 10 Masse-% beträgt, bevorzugt 0,1 Masse-% bis 10 Masse-%.

11. Lithiumtitanatmaterial mit linearer hierarchischer Struktur nach einem der Ansprüche 7 bis 10, wobei in dem Schritt (a2) die Hydrolysereaktion das Dispergieren der Titanquelle in Wasser zur Hydrolyse umfasst, um ein hydratisiertes Titansäurepräzipitat zu erzeugen, oder die Hydrolysereaktion das Dispergieren der Titanquelle in einer wässrigen Lösung umfasst, die eine alkalische Substanz zur Hydrolyse enthält, um ein hydratisiertes Titansäurepräzipitat zu erzeugen, wobei die alkalische Substanz bevorzugt aus einem oder mehreren von wässrigem Ammoniak, Natriumhydroxid, Kaliumhydroxid, Tetramethylammoniumhydroxid, Tetraethylammoniumhydroxid, Tetrapropylammoniumhydroxid, Tetrabutylammoniumhydroxid, Ethylendiamin, Diethylamin, Triethylamin, Ethylamin, Ethanolamin und Diethanolamin ausgewählt ist.

12. Lithiumtitanatmaterial mit linearer hierarchischer Struktur nach einem der Ansprüche 7 bis 11, wobei der Schritt (a2) ferner einen Schritt des Reinigens des erhaltenen hydratisierten Titansäurepräzipitat-Rohproduktes nach der Hydrolyse und das Verwenden des gereinigten hydratisierten Titansäurepräzipitats in dem Schritt (b2) umfasst, wobei die gereinigte hydratisierte Titansäure bevorzugt eine Reinheit von 97 % oder mehr aufweist; wobei die Reinigung aus einem oder mehreren von Wasserwäsche - Trennung durch Zentrifugation, Wasserwäsche - Membrantrennung, Wasserwäsche - Filtration und Dialyse ausgewählt ist.

13. Lithiumtitanatmaterial mit linearer hierarchischer Struktur nach einem der Ansprüche 6 bis 12, wobei das Verfahren ferner einen Schritt des Beladens der Oberfläche des erhaltenen Lithiumtitanatmaterials mit linearer hierarchischer Struktur mit einem oder mehreren von Kohlenstoff, Kohlenstoffnanoröhren, Graphen, schwarzem Phosphor, Metallen und Halbleitern umfasst, wenn das Lithiumtitanatmaterial mit linearer hierarchischer Struktur nach der Glühbehandlung in dem Schritt (3) erhalten wird.

14. Verfahren zum Herstellen des Lithiumtitanatmaterials mit linearer hierarchischer Struktur nach einem der Ansprüche 6 bis 13, wobei das Verfahren die folgenden Schritte umfasst:
(1) Herstellen eines Lithiumperoxotitanats mit linearer Struktur;
(2) Unterziehen des in dem Schritt (1) erhaltenen Lithiumperoxotitanats mit linearer Struktur einer hydrothermalen Reaktion oder einer solvothermalen Reaktion, um einen Lithiumtitanat-Vorläufer mit linearer hierarchischer Struktur zu erhalten;
(3) Unterziehen des in dem Schritt (2) erhaltenen Lithiumtitanat-Vorläufers mit linearer hierarchischer Struktur einer Glühbehandlung, um das Lithiumtitanat-Material mit linearer hierarchischer Struktur zu erhalten.

15. Elektrodenmaterial für Ionenbatterie, wobei das Elektrodenmaterial hauptsächlich aus dem Lithiumtitanatmaterial mit linearer hierarchischer Struktur nach einem der Ansprüche 1 bis 13 besteht, wobei die Ionenbatterie bevorzugt aus Lithiumionenbatterie, Natriumionenbatterie, Kaliumionenbatterie oder Magnesiumionenbatterie ausgewählt ist.

## Revendications

1. Matériau de titanate de lithium à structure hiérarchique linéaire, dans lequel la phase cristalline du matériau de titanate de lithium est une phase cristalline de type spinelle ou une phase cristalline monoclinique ou une phase cristalline composite de celles-ci ; le matériau de titanate de lithium est principalement composé d'une structure hiérarchique linéaire ; la structure hiérarchique linéaire a un rapport de forme supérieur à 10, préférablement, la structure hiérarchique linéaire a un rapport de forme allant de 10 à 100 ; et les composants de surface du matériau de titanate de lithium à structure hiérarchique linéaire sont des nanofeuillets, préférablement, la surface du matériau de titanate de lithium à structure hiérarchique linéaire est chargée en outre avec un ou plusieurs éléments choisis parmi le groupe constitué par le carbone, des nanotubes de carbone, le graphène, le phosphore noir, des métaux, et des semi-conducteurs ; préférablement, la structure hiérarchique linéaire de titanate de lithium est une structure linéaire massive ou une structure linéaire creuse ;
dans lequel les nanofeuillets ont une dimension allant de 5 nm à 300 nm, et les nanofeuillets ont une épaisseur allant de 1 nm à 20 nm.

2. Matériau de titanate de lithium à structure hiérarchique linéaire selon la revendication 1, dans lequel la structure hiérarchique linéaire a un diamètre allant de 20 nm à 1 µm et une longueur allant de 1 µm à 50 µm.

3. Matériau de titanate de lithium à structure hiérarchique linéaire selon la revendication 1 ou 2, dans lequel la structure hiérarchique linéaire a un diamètre allant de 50 nm à 500 nm et une longueur allant de 5 µm à 20 µm.

4. Matériau de titanate de lithium à structure hiérarchique linéaire selon l'une quelconque des revendications précédentes, dans lequel les nanofeuillets ont une dimension allant de 10 nm à 100 nm.

5. Matériau de titanate de lithium à structure hiérarchique linéaire selon l'une quelconque des revendications précédentes, dans lequel les nanofeuillets ont une épaisseur allant de 1 nm à 10 nm.

6. Matériau de titanate de lithium à structure hiérarchique linéaire selon l'une quelconque des revendications précédentes, dans lequel le matériau de titanate de lithium à structure hiérarchique linéaire est produit par un procédé de préparation comprenant les étapes suivantes :
(1) préparation d'un peroxotitanate de lithium à structure linéaire ;
(2) soumission du peroxotitanate de lithium à structure linéaire obtenu dans l'étape (1) à une réaction hydrothermique ou une réaction solvothermique pour obtenir un précurseur de titanate de lithium à structure hiérarchique linéaire ; préférablement, le système réactionnel de la réaction hydrothermique est choisi parmi un système d'eau pure, un système d'eau acide ou un système d'eau alcaline ; et la réaction hydrothermique est réalisée à une température allant de 100 °C à 150 °C pendant 1 h à 24 h ; préférablement, la réaction solvothermique est choisie parmi un système de solution aqueuse alcoolique ou un système de solution alcoolique ; et la réaction solvothermique est réalisée à une température allant de 80 °C à 150 °C pendant 1 h à 24 h ;
(3) soumission du précurseur de titanate de lithium à structure hiérarchique linéaire obtenu dans l'étape (2) à un traitement d'hybridation pour obtenir le matériau de titanate de lithium à structure hiérarchique linéaire ; préférablement, le traitement d'hybridation est réalisé à une température allant de 300 °C à 700 °C pendant 1 h à 24 h.

7. Matériau de titanate de lithium à structure hiérarchique linéaire selon la revendication 6, dans lequel le procédé comprend en outre la préparation d'un peroxotitanate de lithium à structure linéaire, comprenant les étapes suivantes :
(a1) préparation d'une dispersion contenant un complexe titane-peroxo ; préférablement, le complexe titane-peroxo dans la dispersion contenant un complexe titane-peroxo a une concentration allant de 0,01 mol/L à 1 mol/L, préférablement de 0,05 mol/L à 0,5 mol/L ;
(b1) ajout d'un composé lithium dans la dispersion contenant un complexe titane-peroxo obtenu dans l'étape (a1) pour former une solution ; préférablement, le composé lithium est choisi parmi un ou plusieurs parmi l'hydroxyde de lithium, l'oxyde de lithium, le peroxyde de lithium, et le superoxyde de lithium ; préférablement, le composé lithium est ajouté en une quantité telle que la concentration d'ions lithium dans la solution formée par l'ajout du composé lithium va de 0,4 mol/L à 2,0 mol/L ;
(c1) soumission de la solution obtenue dans l'étape (b1) à une réaction sous chauffage pour obtenir le peroxotitanate de lithium à structure linéaire ;
en variante, comprenant les étapes suivantes :
(a2) soumission d'une source de titane à une réaction d'hydrolyse pour former un précipité d'acide titanique hydraté ; préférablement, la source de titane est choisie parmi un ou plusieurs parmi l'éthylate de titane, l'isopropylate de titane, le titanate de tétrabutyle, le glycolate de titane, le glycérate de titane, le sulfate de titane, l'oxysulfate de titane, le tétrachlorure de titane, le tétrafluorure de titane, le fluorotitanate d'ammonium, le nitrure de titane, l'acide titanique, et des composés contenant du titane industriel ;
(b2) dispersion du précipité d'acide titanique hydraté obtenu dans l'étape (a2) dans une solution aqueuse de peroxyde d'hydrogène contenant de l'hydroxyde de lithium, et une agitation pour former une solution ; préférablement, la concentration de l'hydroxyde de lithium dans la solution aqueuse d'hydroxyde d'hydrogène contenant de l'hydroxyde de lithium va de 0,4 mol/L à 2,0 mol/L, plus préférablement de 1,0 mol/L à 1,5 mol/L ; préférablement, la fraction volumique du peroxyde d'hydrogène dans la solution aqueuse d'hydroxyde d'hydrogène contenant de l'hydroxyde de lithium va de 0,5 % à 10 %, plus préférablement de 1 % à 3 % ;
(c2) soumission de la solution obtenue dans l'étape (b2) à une réaction sous chauffage pour obtenir le peroxotitanate de lithium à structure linéaire ;
préférablement, dans l'étape (c1) et l'étape (c2), la réaction sous chauffage est réalisée indépendamment à une température allant de 60 °C à 100 °C pendant 0,5 h à 24 h.

8. Matériau de titanate de lithium à structure hiérarchique linéaire selon la revendication 7, dans lequel le procédé comprend en outre le fait de soumettre le peroxotitanate de lithium à structure linéaire obtenu dans l'étape (c1) et l'étape (c2) à un traitement à basse température pour la décomposition et l'élimination du peroxy à la surface du peroxotitanate de lithium à structure linéaire, pour obtenir le peroxotitanate de lithium à structure linéaire ayant le peroxy éliminé à la surface de celui-ci ; préférablement, le traitement à basse température est réalisé à une température allant de 120 °C à 200 °C pendant 1 h à 12 h.

9. Matériau de titanate de lithium à structure hiérarchique linéaire selon la revendication 7, dans lequel le procédé comprend en outre le procédé destiné à préparer une dispersion contenant le complexe titane-peroxo, comprenant l'étape de : dispersion d'un composé titane dans une solution aqueuse de peroxyde pour former une dispersion, de manière à obtenir la dispersion contenant le complexe titane-peroxo ; préférablement, le composé titane est choisi parmi un ou plusieurs parmi le titane métallique, l'éthylate de titane, l'isopropylate de titane, le titanate de tétrabutyle, le glycolate de titane, le glycérate de titane, le sulfate de titane, l'oxysulfate de titane, le tétrachlorure de titane, le tétrafluorure de titane, le fluorotitanate d'ammonium, le nitrure de titane, l'oxyde de titane, et l'acide titanique ; préférablement, le peroxyde est choisi parmi un ou plusieurs parmi le peroxyde d'hydrogène, le peroxyde d'urée et l'acide péracétique.

10. Matériau de titanate de lithium à structure hiérarchique linéaire selon la revendication 9, dans lequel le procédé comprend en outre, après la dispersion d'un composé titane dans une solution aqueuse de peroxyde pour former une dispersion, l'ajout d'un polymère dans la dispersion, pour obtenir la dispersion contenant le complexe titane-peroxo ; préférablement, le polymère est choisi parmi un ou plusieurs parmi le chitosane, le guar, la méthylcellulose, l'éthylcellulose, l'hydroxyéthylcellulose, l'hydroxypropylcellulose, l'hydroxypropylméthylcellulose, l'alcool polyvinylique, le polyacrylamide, le poly(oxyde d'éthylène), le polyéthylène glycol, et la polyvinylpyrrolidone ; préférablement, le polymère est ajouté en en quantité telle que la teneur en polymère dans la dispersion obtenue contenant le complexe titane-peroxo va de 0,01 % à 10 % en masse, préférablement de 0,1% à 10 % en masse.

11. Matériau de titanate de lithium à structure hiérarchique linéaire selon l'une quelconque des revendications 7 à 10, dans lequel dans l'étape (a2), la réaction d'hydrolyse comprend la dispersion de la source de titane dans de l'eau pour que l'hydrolyse produise un précipité d'acide titanique hydraté, ou la réaction d'hydrolyse comprend la dispersion de la source de titane dans une solution aqueuse contenant une substance alcaline pour que l'hydrolyse produise un précipité d'acide titanique hydraté, préférablement, la substance alcaline est choisie parmi un ou plusieurs parmi l'ammoniaque aqueuse, l'hydroxyde de sodium, l'hydroxyde de potassium, l'hydroxyde de tétraméthylammonium, l'hydroxyde de tétraéthylammonium, l'hydroxyde de tétrapropylammonium, l'hydroxyde de tétrabutylammonium, l'éthylènediamine, la diéthylamine, la triéthylamine, l'éthylamine, l'éthanolamine, et la diéthanolamine.

12. Matériau de titanate de lithium à structure hiérarchique linéaire selon l'une quelconque des revendications 7 à 11, l'étape (a2) comprend en outre une étape de purification du produit brut de précipité d'acide titanique hydraté obtenu après l'hydrolyse et l'utilisation du précipité d'acide titanique hydraté purifié dans l'étape (b2), préférablement, l'acide titanique hydraté purifié ayant une pureté supérieure ou égale à 97 % ; dans lequel la purification est choisie parmi un ou plusieurs parmi lavage à l'eau - séparation par centrifugation, lavage à l'eau - séparation par membrane, lavage à l'eau - filtration et dialyse.

13. Matériau de titanate de lithium à structure hiérarchique linéaire selon l'une quelconque des revendications 6 à 12, dans lequel le procédé comprend en outre une étape de chargement de la surface du matériau de titanate de lithium à structure hiérarchique linéaire obtenu avec un ou plusieurs parmi le carbone, des nanotubes de carbone, le graphène, le phosphore noir, des métaux, et des semi-conducteurs, quand le matériau de titanate de lithium à structure hiérarchique linéaire est obtenu après le traitement d'hybridation dans l'étape (3).

14. Procédé de préparation du matériau de titanate de lithium à structure hiérarchique linéaire selon l'une quelconque des revendications 6 à 13, dans lequel le procédé comprend les étapes suivantes :
(1) préparation d'un peroxotitanate de lithium à structure linéaire ;
(2) soumission du peroxotitanate de lithium à structure linéaire obtenu dans l'étape (1) à une réaction hydrothermique ou à une réaction solvothermique pour obtenir un précurseur de titanate de lithium à structure hiérarchique linéaire ;
(3) soumission du précurseur de titanate de lithium à structure hiérarchique linéaire obtenu dans l'étape (2) à un traitement d'hybridation pour obtenir le matériau de titanate de lithium à structure hiérarchique linéaire.

15. Matériau d'électrode pour une batterie à ion, dans lequel le matériau d'électrode est principalement composé du matériau de titanate de lithium à structure hiérarchique linéaire selon l'une quelconque des revendications 1 à 13, préférablement, la batterie à ion est choisie parmi une batterie lithium-ion, une batterie sodium-ion, une batterie potassium-ion, ou une batterie magnésium-ion.
